# EUROPEAN PATENT APPLICATION

(11) **EP 2 341 478 A1**
(43) Date of publication of application: **06.07.2011**
(21) Application number: 09291004.1
(22) Date of filing: 31.12.2009
(51) Int. Cl.: G06Q 30/00

(54) **Method for providing an electronic receipt**

(71) Applicant: Gemalto SA, 92190 Meudon (FR)
(72) Inventor: Grenier, Fabrice, 92190 Meudon (FR)

(57) **Abstract**

The present invention is a method for providing, to a user (4), a receipt transacted at a point-of-sale device with a secure device of said user(4), wherein it comprises sending at a destination of the user (4) said electronic receipt by the point-of-sale device, without giving the point-of-sale device the destination of the user (4).

## Description

### FIELD OF THE INVENTION

The invention relates to the field of commercial transactions, and especially deals with electronic transactions.

### BACKGROUND OF THE INVENTION

Point-of-sale (POS) devices are widely used for processing transactions. Banks and Merchants are always complaining of paper roll management and cost of these paper rolls. Banks mention as an issue the stock management of paper roll, especially when they have different diameters.

In some countries, banks and merchants would like to perform transactions without providing a ticket receipt to the cardholder.

The document US2007006901 proposes an electronic equipment which performs a transaction that may ask the cardholder what he wants to do with the transaction. In this case, the user can choose to store the electronic receipt on a smart card or to send it sent to an email address which can be specified by the cardholder manually.

Nevertheless in this method, the cardholder has to enter his personal data into the terminal of the merchant which is not secure.

### SUMMARY OF THE INVENTION

It is an object of the invention to provide a new way for preventing ticket receipt printing after each transaction, by sending to the cardholder the electronic receipts in a secure manner so as to avoid using paper and to receive details of the transactions securely and without giving to the point-of-sale the destination of the cardholder.

Thereto, the present invention provide a method for providing, to a user, a receipt transacted at a point-of-sale device with a secure device of said user, wherein it comprises sending at a destination of the user said electronic receipt by the point-of-sale device, without giving the point-of-sale device the destination of the user.

According to other aspects of the invention:
- the method may comprise storing the destination of the user, a destination of a trusted service and a public key of the trusted service;
- the destination of the user may be encrypted with the public key of the trusted service ;
- once the destination of the user has been encrypted and after a transaction has been operated, the secure device may send the encrypted destination of the user and the destination of the trusted service to the point-of-sale device;
- it may comprise sending the receipt and the encrypted destination of the user to the trusted service;
- the trusted service may decrypt the user destination with its private key so as to send the receipt to the destination of the user;
- the trusted service may receive a receipt delivery when the receipt is successfully received by the user;
- it may comprise printing the receipt if the sending of the receipt and the encrypted destination of the user to the trusted service fails or if the sending of said receipt to the destination of the user is unsuccessful;
- the transaction between the secure device and the point-of-sale device may be done contactless;
- it may comprise signing the encrypted destination of the user;
- it may comprise sending the signed encrypted destination to the trusted service;
- it may comprise storing a counter value which increases at each transaction or means a random value which is generated at each transaction, said counter value or said random value being used for a concatenation with the destination of the user before being encrypted and/or signed by said secure device;
- it may comprise encrypting the receipt;
- it may comprise storing a public key of the user and storing a private key of the user associated with said public key of the user, said public key of the user being used for encrypting the receipt;
- it may comprise updating the destination of the user or the trusted service in the secure device of the user.

Thanks to this method, an email address of the cardholder and a public key are stored in the card during the personalization of the card. It provides storing email address of a cardholder in a secure device such as a smart card, sending to himself an email address without providing the email address to sending machine, and securing the content of an email sent to himself so as to be the only one able to read that email.

Thanks to this method, a cardholder can easily store directly only desired transactions received by email. The cardholder is the only person who can open and read the electronic receipt.

The destination for the reception of the receipt is not known by the POS device.

The cardholder can be the only person who can open and read the receipt. No one else being able to know which product or service has been purchased

The use of a trusted service avoids to a cardholder to give his mail address and therefore avoid to be spammed from the sender, or any other third party. Only the trusted service can access the card holder email address.

The invention is now described, by way of example, with reference to the accompanying drawings. The specific nature of the following description should not be construed as limiting in any way the broad nature of this summary.

### BRIEF DESCRIPTION OF THE DRAWINGS

In order that the manner in which the above recited and other advantages and features of ·the invention are obtained, a more particular description of the invention briefly described above will be rendered by reference.

Notwithstanding any other forms that may fall within the scope of the present invention, preferred forms of the invention will now be described, by way of example only, with reference to the accompanying drawing in which:

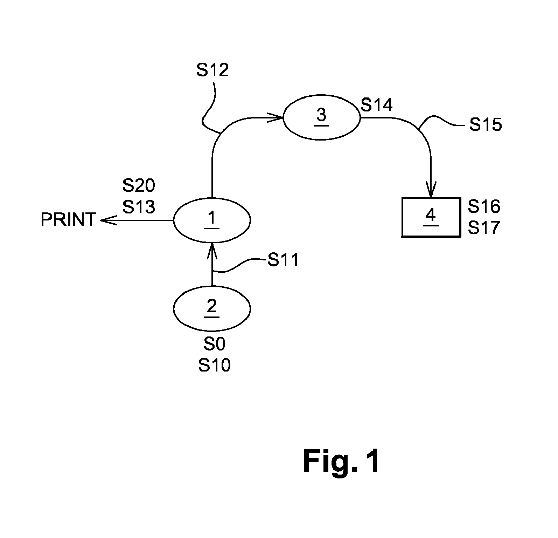

**FIG.1** schematically shows an embodiment of a method according to the invention in a nominal use case.

### DETAILED DESCRIPTION OF THE PREFERRED EMBODIMENTS

The present invention may be understood according to the detailed description provided herein.

Shown in Fig.1 is an embodiment of the method according to the invention for electronically receipting transactions transacted at a terminal such as a POS device 1.

The POS device 1 is adapted to send electronic transactions.

When a user 4 or a cardholder 4 goes to the merchant and purchases some goods, the merchant first enters a corresponding amount in a terminal 1 or point-of-sale device 1 (POS) .

The cardholder 4 or the merchant then enters a secure device 2 such as a card 2 of the cardholder in a corresponding slot of the terminal and for example enters a PIN code.

The card stores classical data associated to the account of the cardholder 4 such as his account number, his name, a date of validity, etc...

In the following description, the POS device 1 is able to provide electronic receipts and the cardholder accepts automatically to receive by email the electronic receipts of the transactions he made. It is well understood that if there is no cardholder mail address stored in the card, the POS device 1 prints automatically the receipt.

According to the invention, in a step S0, the card stores the destination of the user, a destination of a trusted service 3 and a public key of the trusted service 3.

The destination of the user or cardholder 4 is the mail address of the cardholder 4, and the destination of the trusted service 3 is the mail address of the trusted service 3.

The mail address and the public key of the trusted service 3 are provided by the bank of the cardholder 4.

All these data are stored at the personalisation of the card.

In a step S10, the mail address of the cardholder 4 is encrypted with the public key of the trusted service 3.

Once the mail address has been encrypted in step S10, and after a transaction has been operated, in a step S11, the card sends the encrypted mail address of the cardholder 4, and in clear the mail address of the trusted service 3 to the POS device 1.

In a step S12, the POS device 1 sends the receipt corresponding to the transaction that has been operated and the encrypted mail address to the trusted service 3. The POS device 1 uses the address mail of the trusted service 3.

In a step 13, the receipt is printed by the POS if the sending to the trusted service fails, which may for example happen when the connection between the POS and the trusted service 3 fails, for example due to a sending to a wrong mail address of the trusted or due to an interruption of the connection.

In step S14, the trusted service 3 decrypts the cardholder 4 mail address with its own private key.

Then in a step S15, the trusted service 3 sends the receipt to the address mail of the cardholder 4 it has decrypted. Then In a step S17, the cardholder 4 consults the mailbox corresponding to the mail address stored in his card, and can read and treat his receipt.

In these steps, the receipt is sent enclosed to a classical mail to the trusted service and to the cardholder 4.

In another embodiment, after the step S15, when the cardholder 4 successfully receives a message in the mailbox corresponding to the mail address stored in his card and decrypted by the trusted service 3, in a step S16, a receipt delivery is sent to the trusted service 3. Otherwise, if in step S15 the sending of the receipt by the trusted service 3 to the mail address of the cardholder 4 is unsuccessful, the POS prints a receipt in a step 20. This may for example happen if the mail address of the cardholder 4 is not valid. In this case, the trusted service 3 receives an error message. The trusted service 3 send back this message or a corresponding flag to the POS device 1 for printing the receipt.

In another embodiment, in step S0, a private key of the bank of the cardholder 4, provided by the bank of the cardholder 4, is stored in the card. A public key of the bank associated with this private key, is sent by the bank of the cardholder 4 to the trusted service 3 in which it is then stored. The private key of the bank is used by the card to sign, in a step S21, the encrypted mail address of the cardholder 4. The public key of the bank is used by the trusted service for checking the signature when it receives the encrypted mail address by the POS.

The private key of the bank can also be used to sign the stored mail address of the cardholder 4 only without any encryption.

In another embodiment, in step s0, the card stores a counter which increases at each transaction or means adapted to generate a random number which generate a random number at each transaction. The mail address is concatenated with the counter value or with the random value. The concatenated data is then encrypted with the private key of the trusted service 3.

The concatenated data or the random value or the counter value is signed by the card. The signature is then different for each transaction. When receiving the encrypted data, the trusted service 3 checks the signature using the public key of the bank of the cardholder 4, and can advantageously prove to the bank of the cardholder 4 how many services it has really performed in order to charge the bank for the provided service(s). Of course it is well understood that the trusted service has to provide also how many receipt he really sends to the cardholder 4 by providing to the bank for example a copy of the messages sent to the cardholder 4, or a copy of delivery receipts, etc...

With these embodiments, the card can send to the POS device 1, in step S11, the mail address of the user which is encrypted and signed, or the mail address of the cardholder 4 encrypted and the mail address of the cardholder 4 signed, or both the mail address of the cardholder 4 and the value of the counter encrypted and signed, or both the mail address of the cardholder 4 and the value of the counter encrypted and the mail address of the cardholder 4 signed.

In another embodiment, the card of the cardholder 4 stores a public key of the cardholder 4 for encrypting the receipt. In the step S11, the card may also sends the public key of the cardholder 4 to the POS device 1 so as the POS device 1 is able to encrypt the receipt with this key. The receipt is encrypted in the POS device 1 before being sent for example as an enclosed document, to the trusted service 3. The POS device 1 may include an algorithm of encryption, and uses the public key of the cardholder 4 received by the card. The cardholder 4 has an associated private key for the decryption of the encrypted receipt. Only the cardholder 4 can advantageously decrypt the receipt with its private key. Neither the trusted service 3 nor someone who would have intercepted or tried to read the message of the cardholder 4, can know details of the transaction.

In another embodiment, the receipt is encrypted in the trusted service 3 before being sent to the cardholder 4. In this case, the POS 1 also sends to the destination of the trusted service, the public key of the cardholder 4 provided by the card of the cardholder 4 with the receipt and the encrypted and/or signed data which comprises the mail address of the cardholder 4. The cardholder 4 can then decrypt the receipt with its private key.

In another embodiment, the receipt is sent as part of the mail the trusted service or the cardholder 4 will receive respectively from the POS device 1 or the trusted service 3.
In this case, the message can be encrypted. For doing so, the trusted service 3 and a terminal of the cardholder 4 used for reading his emails, embeds specific softwares for mail encryption and decryption. They can use standard solutions as known in the art for the encryption and the decryption such as S_MIME, openPGP, etc...

In another embodiment, after step 16, the trusted service 3 sends in its turn the delivery receipt to the POS device 1 so as the POS device 1 is able to detect if the electronic receipt has been successfully been received. The POS may display a message which informs the cardholder 4 that data related to the transaction have been sent by email in a step S19, which can then be checked by the cardholder 4.

According to the present invention, the POS prints the receipt if any problem occurs during the processing of reading the card.

The POS device 1 may also print a receipt if no message is received from the trusted service 3 within a predetermined time period, for example if the trusted service does not receive any delivery receipt.

The POS device 1 may also print a receipt if no message is received by the cardholder 4 at the end of a predetermined time, for example at the end of 1 minute. The cardholder 4 in this case is able to check the reception of the receipt using for example a mobile phone.

In another embodiment, the transaction between the secure device and the terminal is done contactless. The POS is equipped with a contactless reader able to exchange data with contactless secure devices (dual interface card, pure contactless card, NFC a Near-Field Communication (NFC) enabled mobile handset or other type of contact or contactless communication.

According to another embodiment, it is possible to update the destination of the trusted service 3 and the associated key. It is also possible to update the destination of the cardholder 4 or to have more than one trusted service or destination of the cardholder 4 that can be selected by the card or the POS.

If POS is for example corrupted and sends voluntarily the electronic receipt to a fake trusted service, it is accepted that the ticket will not be printed, the fake trusted service will not be able to decrypt the email address of the cardholder and the cardholder will never receive its electronic email.

It will be well understood that all these embodiments can be combined and are not limited examples, and that anyone who wants to receive securely a transaction or any message from a point-of-sale service or any sender service without giving this sender service the destination address can use this secure method.

Thanks to the invention the email address is securely stored in the smart card which provides a public key to secure the receipt sending. The use of a trusted service avoids to a cardholder to give his mail address and therefore avoid to be spammed from the sender, or any other third party. Only the trusted service can access the cardholder email address.

## Claims

1. Method for providing, to a user (4), a receipt transacted at a point-of-sale device with a secure device of said user(4), wherein it comprises sending at a destination of the user (4) said electronic receipt by the point-of-sale device, without giving the point-of-sale device the destination of the user (4).

2. Method according to claim 1, wherein it comprises (step S0) storing the destination of the user (4), a destination of a trusted service (3) and a public key of the trusted service (3).

3. Method according to claim 2, wherein the destination of the user (4) is encrypted with the public key of the trusted service (3) (step S10).

4. Method according to claim 3, wherein once the destination of the user (4) has been encrypted (step S10) and after a transaction has been operated, the secure device sends (step S11) the encrypted destination of the user (4)and the destination of the trusted service (3) to the point-of-sale device.

5. Method according to claim 4, wherein it comprises sending (step S12) the receipt and the encrypted destination of the user (4) to the trusted service (3).

6. Method according to claim 3 to 5, wherein the trusted service (3) decrypts (step 14) the destination with its private key so as to send (step 15) the receipt to the destination of the user(4).

7. Method according to claim 6, wherein the trusted service (3) (step S16) receives a receipt delivery when the receipt is successfully received by the user (4).

8. Method according to claim 5 or 6, wherein it comprises printing (step S13, S20) the receipt if the sending (step S12) of the receipt and the encrypted destination of the user (4) to the trusted service (3) fails or if the sending (step S15) of said receipt to the destination of the user (4) is unsuccessful.

9. Method according to one of the previous claims, wherein the transaction between the secure device and the point-of-sale device is done contactless.

10. Method according to one of the previous claim, wherein it comprises signing (step S21) the encrypted destination of the user (4).

11. Method according to claim 10, wherein it comprises sending the signed encrypted destination to the trusted service (3).

12. Method according to one of the previous claim, wherein it comprises storing a counter value which increases at each transaction or means a random value which is generated at each transaction, said counter value or said random value being used for a concatenation with the destination of the user (4) before being encrypted and/or signed by said secure device.

13. Method according to one of the previous claim wherein it comprises encrypting the receipt.

14. Method according to claim 13, wherein it comprises storing a public key of the user (4) and storing a private key of the user (4) associated with said public key of the user (4), said public key of the user (4) being used for encrypting the receipt.

15. Method according to one of the previous claim, wherein it comprises updating the destination of the user (4) or the trusted service in the secure device of the user (4).
